# EUROPEAN PATENT APPLICATION

(11) **EP 4 773 300 A1**
(43) Date of publication of application: **08.07.2026**
(21) Application number: 24895411.7
(22) Date of filing: 10.05.2024
(51) Int. Cl.: H01M 10/0567, H01M 10/0569, H01M 10/0525

(54) **ELECTROLYTE, LITHIUM SECONDARY BATTERY, AND ELECTRIC DEVICE**

(30) Priority: 28.11.2023 CN 202311600919
(71) Applicant: Contemporary Amperex Technology Co., Limited, Ningde, Fujian 352100 (CN)
(72) Inventor: ZHANG, Cuiping, Ningde, Fujian 352100 (CN); HAN, Changlong, Ningde, Fujian 352100 (CN)
(74) Representative: Ziebig Hengelhaupt Intellectual Property Attorneys Patentanwaltskanzlei PartGmbB
(86) International application number: PCT/CN2024/092379
(87) International publication number: WO 2025/112300

(57) **Abstract**

Disclosed are an electrolyte, a lithium secondary battery, and an electric device. The electrolyte includes a first solvent, a silane compound containing a carbon-carbon double bond, and a cyclic lithium borate compound. The first solvent includes a cyclic carbonate compound. Based on a total mass of the electrolyte, a mass content W3 of the cyclic carbonate compound, a mass content W1 of the silane compound containing a carbon-carbon double bond, and a mass content W2 of the cyclic lithium borate compound satisfy: 0.001 ≤ (W1+W2)/W3 ≤ 2.67. The silane compound containing a carbon-carbon double bond and the cyclic lithium borate compound are used in combination, which can improve the flexibility and thermal stability of an SEI film, thereby reducing the degree of gas production of the lithium secondary battery during the processes of cycling and storage and improving the storage performance, fast charge performance and cycling performance of the lithium secondary battery.

## Description

### CROSS-REFERENCE TO RELATED APPLICATIONS

The present application claims priority to Chinese Patent Application No. 202311600919.X, filed on November 28, 2023 and entitled "ELECTROLYTE, LITHIUM SECONDARY BATTERY, AND ELECTRIC DEVICE", which is incorporated herein by reference in its entirety.

### TECHNICAL FIELD

The present application relates to the technical field of lithium batteries, and in particular, to an electrolyte, a lithium secondary battery, and an electric device.

### BACKGROUND

In recent years, as lithium-ion batteries are increasingly widely used, the lithium-ion batteries have been widely used in energy storage power systems such as hydroelectric power plants, thermal power plants, wind power plants, and solar power plants, and various fields such as electric tools, electric bicycles, electric motorcycles, electric vehicles, military equipment, and aerospace. Due to great development of the lithium-ion batteries, higher requirements have been put forward for energy density, cycling performance, safety performance, and the like of the lithium-ion batteries.

Enhancing power performance, cycle life, and storage life of the battery has long been a pursuit in the industry. However, side reactions occurring at the interfaces between the electrolyte, and the anode and cathode result in poor overall cell performance.

### SUMMARY

In view of the foregoing problems, an objective of the present application is to provide an electrolyte, so as to improve the flexibility and thermal stability of a solid electrolyte interface (SEI) film, thereby reducing the degree of gas production of the lithium secondary battery during the processes of cycling and storage, improving the storage performance, fast charge performance and cycling performance of the lithium secondary battery, and comprehensively improving the performance of the lithium secondary battery.

To achieve the foregoing objective, a first aspect of the present application provides an electrolyte for a lithium secondary battery, including a first solvent, a silane compound containing a carbon-carbon double bond, and a cyclic lithium borate compound. The first solvent includes a cyclic carbonate compound. The cyclic carbonate compound includes at least one of ethylene carbonate, fluoroethylene carbonate, and propylene carbonate. Based on a total mass of the electrolyte, a mass content W3 of the cyclic carbonate compound, a mass content W1 of the silane compound containing a carbon-carbon double bond, and a mass content W2 of the cyclic lithium borate compound satisfy: 0.001 ≤ (W1+W2)/W3 ≤ 2.67.

In any implementation, based on the total mass of the electrolyte, the mass content W3 of the cyclic carbonate compound, the mass content W1 of the silane compound containing a carbon-carbon double bond, and the mass content W2 of the cyclic lithium borate compound satisfy: 0.005 ≤ (W1+W2)/W3 ≤ 2.

By controlling the content of the cyclic carbonate compound in the electrolyte within an appropriate range and adding the silane compound containing a carbon-carbon double bond and the cyclic lithium borate compound within the above content ranges, the flexibility and thermal stability of the SEI film can be effectively improved, thereby achieving the balance between storage performance and direct current impedance of the lithium secondary battery and comprehensively improving the performance of the lithium secondary battery.

In any implementation, the cyclic carbonate compound includes at least one of ethylene carbonate, fluoroethylene carbonate, and propylene carbonate.

When the cyclic carbonate compound is used as the solvent in the electrolyte, the electrolyte has excellent ion conductivity and film-forming performance.

In any implementation, the silane compound containing a carbon-carbon double bond includes at least one of tetravinylsilane, trivinylethylsilane, divinyldiethylsilane, and vinyltrimethylsilane.

In any implementation, the silane compound containing a carbon-carbon double bond includes tetravinylsilane.

Because of the presence of the carbon-carbon double bond, the silane compound containing a carbon-carbon double bond can form a film at the anode prior to the cyclic carbonate compound and produce polymer components in the SEI film, thereby improving the flexibility of the SEI film. Moreover, the SEI film can cover the surface of the anode plate to reduce the exposure of the anode plate to the electrolyte, thereby reducing side reaction and gas production and improving the performance of the lithium secondary battery.

In any implementation, the cyclic lithium borate compound includes a compound with a structure shown in formula I, 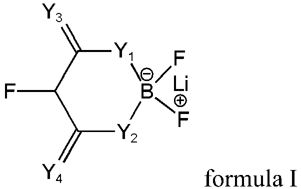 where Y₁, Y₂, Y₃, and Y₄ each independently include at least one of an oxygen atom and a sulfur atom.

In any implementation, the cyclic lithium borate compound includes at least one of

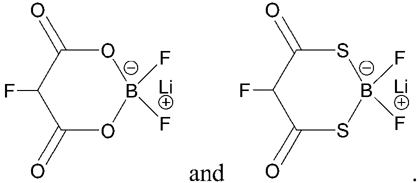

The foregoing cyclic lithium borate compound can be reduced to form a film prior to the cyclic carbonate compound and form components rich in lithium salt in the SEI film, thereby improving the thermal stability of the SEI film and reducing the degree of oxidative decomposition of the entire SEI film and the solubility of the SEI film in the electrolyte solvent, thus improving the storage performance of the lithium secondary battery.

In any implementation, based on the total mass of the electrolyte, the mass content W1 of the silane compound containing a carbon-carbon double bond and the mass content W2 of the cyclic lithium borate compound satisfy: 0.01 ≤ W1/W2 ≤ 200.

In any implementation, based on the total mass of the electrolyte, the mass content W1 of the silane compound containing a carbon-carbon double bond and the mass content W2 of the cyclic lithium borate compound satisfy: 0.1 ≤ W1/W2 ≤ 10.

In any implementation, based on the total mass of the electrolyte, the mass content W1 of the silane compound containing a carbon-carbon double bond and the mass content W2 of the cyclic lithium borate compound satisfy: 0.5 ≤ W1/W2 ≤ 5.

By controlling the ratio of the mass content of the silane compound containing a carbon-carbon double bond to the mass content of the cyclic lithium borate compound within an appropriate range, the silane compound containing a carbon-carbon double bond and the cyclic lithium borate compound can cooperate to comprehensively improve the flexibility and thermal stability of the SEI film, thereby achieving the balance between the storage performance and direct current impedance of the lithium secondary battery and comprehensively improving the performance of the lithium secondary battery.

In any implementation, based on the total mass of the electrolyte, the mass content W3 of the cyclic carbonate compound satisfies: 3% ≤ W3 ≤ 20%.

In any implementation, based on the total mass of the electrolyte, the mass content W3 of the cyclic carbonate compound satisfies: 5% ≤ W3 ≤ 20%.

By controlling the content of the cyclic carbonate compound in the electrolyte within an appropriate range, the balance between the formation of the SEI film and the ion conductivity of the electrolyte can be achieved, thereby improving the cycling performance of the lithium secondary battery and reducing the degree of gas production during storage.

In any implementation, based on the total mass of the electrolyte, the mass content W1 of the silane compound containing a carbon-carbon double bond satisfies: 0.01% ≤ W1 ≤ 5%.

In any implementation, based on the total mass of the electrolyte, the mass content W1 of the silane compound containing a carbon-carbon double bond satisfies: 0.01% ≤ W1 ≤ 3%.

By controlling the content of the silane compound containing a carbon-carbon double bond in the electrolyte within an appropriate range, the flexibility of the SEI film can be improved, and side reaction and gas production are reduced, thereby improving the performance of the lithium secondary battery.

In any implementation, based on the total mass of the electrolyte, the mass content W2 of the cyclic lithium borate compound satisfies: 0.01% ≤ W2 ≤ 3%.

In any implementation, based on the total mass of the electrolyte, the mass content W2 of the cyclic lithium borate compound satisfies: 0.1% ≤ W2 ≤ 2%.

By controlling the content of the cyclic lithium borate compound in the electrolyte within an appropriate range, the thermal stability of the SEI film can be improved, thereby improving the storage performance of the lithium secondary battery.

In any implementation, the electrolyte includes a second solvent. The second solvent includes a linear carbonate compound. The linear carbonate compound includes at least one of dimethyl carbonate, ethyl methyl carbonate, diethyl carbonate, ethyl acetate, methyl acetate, methyl propionate, ethyl propionate, and propyl propionate.

By adding the foregoing type of second solvent to the electrolyte, the viscosity of the electrolyte can be reduced, and the conductivity of the electrolyte can be improved, thereby further improving the fast charge performance and the cycle life of the battery.

In any implementation, the electrolyte includes a lithium salt. The lithium salt includes at least one of lithium hexafluorophosphate, lithium bis(fluorosulfonyl)imide, lithium fluorosulfonyl(perfluorobutylsulfonyl)imide, and lithium bis(trifluoromethylsulfonyl)imide. A concentration of the lithium salt in the electrolyte is 0.8 mol /L to 1.3 mol/L.

By controlling the concentration of the lithium salt in the electrolyte within the foregoing range, the connectivity of the electrolyte can be relatively high, which is beneficial to further improving the cycle life of the battery.

A second aspect of the present application provides a lithium secondary battery, including a positive electrode plate, a negative electrode plate, and the electrolyte according to the first aspect of the present application.

In any implementation, the positive electrode plate includes a positive electrode current collector and a positive electrode material layer located on at least one side of the positive electrode current collector. The positive electrode material layer includes one or more of Li_{d}[NiₓCo_{y}X1_{z}M1_{1-x-y-z}]O₂, LiMn₂O₄, Li₂MnO₃·(1-a)LiAO₂ and LiM2X2O₄. 0.1 ≤ d ≤ 1, and X1 includes Mn and/or Al. M1 includes one or more of Co, Ni, Mn, Mg, Cu, Zn, Al, Sn, B, Ga, Cr, Sr, V, and Ti. 0 ≤ x < 1, 0 ≤ y ≤ 1, 0 ≤ z ≤ 1, and x + y + z ≤ 1. A includes one or more of Ni, Co, and Mn. 0 < a < 1. M2 includes one or more of Fe, Mn, Ni, and Co. X2 in X2O₄^{h-} includes one or more of S, P, As, V, Mo, and W. h = 2 or 3.

In any implementation, the positive electrode material layer includes Li_{d}[NiₓCo_{y}X1_{z}M1_{1-x-y-z}]O₂. 0.1 ≤ d ≤ 1. X1 includes Mn and/or Al. M1 includes one or more of Co, Ni, Mn, Mg, Cu, Zn, Al, Sn, B, Ga, Cr, Sr, V, and Ti. 0 ≤ x < 1, 0 ≤ y ≤ 1, 0 ≤ z ≤ 1, and x + y + z ≤ 1.

In any implementation, the negative electrode plate includes a negative electrode current collector and a negative electrode material layer located on at least one side of the negative electrode current collector. The negative electrode material layer includes at least one of artificial graphite, natural graphite, soft carbon, hard carbon, mesocarbon microbeads, a silicon-based material, and a tin-based material.

In any implementation, the negative electrode material layer includes at least one of artificial graphite and natural graphite.

A third aspect of the present application provides an electric device, including the lithium secondary battery according to the second aspect of the present application.

The secondary battery made by using the electrolyte provided in the present application has improved cycling performance and storage performance. Accordingly, the electric device provided in the present application also has good performance.

### BRIEF DESCRIPTION OF THE DRAWINGS

FIG. 1 is a schematic diagram of a secondary battery according to an implementation of the present application;
FIG. 2 is an exploded view of the secondary battery shown in FIG. 1 according to an implementation of the present application; and
FIG. 3 is a schematic diagram of an electric device using the secondary battery as a power supply according to an implementation of the present application.

Descriptions of reference numerals:
5 - secondary battery; 51 - case; 52 - electrode assembly; and 53 - cover plate.

### DETAILED DESCRIPTION

Hereinafter, implementations of an electrolyte, a lithium secondary battery, and an electric device of the present application are specifically disclosed in the detailed description with reference to the accompanying drawings as appropriate. However, there will be cases where unnecessary detailed descriptions are omitted. For example, there are cases where detailed descriptions of well-known matters and repeated descriptions of actually identical structures are omitted. This is to avoid unnecessary redundancy in the following descriptions and to facilitate the understanding by those skilled in the art. In addition, the accompanying drawings and subsequent descriptions are provided for those skilled in the art to fully understand the present application, and are not intended to limit the subject matter recited in the claims.

A "range" disclosed in the present application is defined in a form of a lower limit and an upper limit, and a given range is defined by selecting a lower limit and an upper limit, and the selected lower limit and upper limit define boundaries of a particular range. A range defined in this manner may be inclusive or exclusive of end values, and may be freely combined, i.e., any lower limit may be combined with any upper limit to form a range. For example, if ranges of 60 to 120 and 80 to 110 are listed for a particular parameter, it is to be understood that ranges of 60 to 110 and 80 to 120 are also expected. Additionally, if minimum range values of 1 and 2 are listed and maximum range values of 3, 4, and 5 are listed, the following ranges may all be contemplated: 1 to 3, 1 to 4, 1 to 5, 2 to 3, 2 to 4, and 2 to 5. In the present application, unless otherwise specified, a numerical range "a to b" represents an abbreviated representation of any combination of real numbers between a and b, where both a and b are real numbers. For example, a numerical range "0 to 5" indicates that all real numbers between "0 to 5" have been listed herein, and "0 to 5" is only an abbreviated representation of a combination of these numerical values. In addition, when a parameter is expressed as an integer ≥2, it is equivalent to disclosing that the parameter is, for example, an integer of 2, 3, 4, 5, 6, 7, 8, 9, 10, 11, 12, or the like.

Unless otherwise specified, all implementations and optional implementations of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, a method includes steps (a) and (b), indicating that the method may include steps (a) and (b) performed sequentially, or may include steps (b) and (a) performed sequentially. For example, reference to "the method may further include step (c)" indicates that step (c) may be added to the method in any order, e.g., the method may include steps (a), (b) and (c), or steps (a), (c) and (b), or steps (c), (a) and (b), or the like.

Unless otherwise specified, "comprising" and "including" mentioned in the present application indicate open inclusion or closed inclusion. For example, "comprising" and "including" may indicate that other components not listed may further be comprised or included, or only listed components may be comprised or included.

If not specifically stated, in the present application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

As a solvent component in the electrolyte, the cyclic carbonate compound (for example, ethylene carbonate) has excellent ion conductivity and film-forming performance, but the proton hydrogen generated in the oxidation process will attack lithium hexafluorophosphate in the solvent to damage the SEI film, causing the continuous redox decomposition of the electrolyte at the positive and negative electrodes, consuming active lithium, and thus deteriorating the cell performance. Moreover, the cyclic carbonate compound (for example, ethylene carbonate) undergo oxidative decomposition at the positive electrode to produce gas, causing the expansion of the cell, a larger distance between the positive electrode and the negative electrode, and a longer lithium ion migration path. To avoid these defects, a common method is to reduce the content of the cyclic carbonate compound (for example, ethylene carbonate) in the electrolyte. However, reducing the content of the cyclic carbonate compound not only affects the ion conductivity of the electrolyte, but also affects the formation of the SEI film.

### [Electrolyte]

To achieve the foregoing objective, the present application provides an electrolyte for a lithium secondary battery, including a first solvent, a silane compound containing a carbon-carbon double bond, and a cyclic lithium borate compound. The first solvent includes a cyclic carbonate compound. The cyclic carbonate compound includes at least one of ethylene carbonate, fluoroethylene carbonate, and propylene carbonate. Based on a total mass of the electrolyte, a mass content W3 of the cyclic carbonate compound, a mass content W1 of the silane compound containing a carbon-carbon double bond, and a mass content W2 of the cyclic lithium borate compound satisfy: 0.001 ≤ (W1+W2)/W3 ≤ 2.67.

In some implementations, based on the total mass of the electrolyte, the mass content W3 of the cyclic carbonate compound, the mass content W1 of the silane compound containing a carbon-carbon double bond, and the mass content W2 of the cyclic lithium borate compound satisfy: 0.005 ≤ (W1+W2)/W3 ≤ 2.

In the electrolyte provided in the present application, the silane compound containing a carbon-carbon double bond can effectively form polymer components in the SEI film, thereby improving the flexibility of the SEI film and suppressing the reduction and decomposition of the electrolyte to some extent. The cyclic lithium borate compound forms components rich in lithium salt in the SEI film, which can improve the thermal stability of the SEI. By means of the cooperation between the silane compound containing a carbon-carbon double bond and the cyclic lithium borate compound, the stability of the SEI film is improved while the flexibility of the SEI film is maintained, thereby reducing the degree of gas production of the lithium secondary battery during the processes of cycling and storage, improving the storage performance and fast charge performance of the lithium secondary battery, and comprehensively improving the cycling performance of the lithium secondary battery.

In addition, by controlling the content of the cyclic carbonate compound in the electrolyte within an appropriate range and adding the silane compound containing a carbon-carbon double bond and the cyclic lithium borate compound within the above content ranges, the flexibility and thermal stability of the SEI film can be effectively improved, thereby achieving the balance between the storage performance and direct current impedance of the lithium secondary battery and comprehensively improving the performance of the lithium secondary battery.

In some implementations, the cyclic carbonate compound includes at least one of ethylene carbonate, fluoroethylene carbonate, and propylene carbonate.

When the cyclic carbonate compound is used as the solvent in the electrolyte, the electrolyte has excellent ion conductivity and film-forming performance.

In some implementations, the silane compound containing a carbon-carbon double bond includes at least one of tetravinylsilane, trivinylethylsilane, divinyldiethylsilane, and vinyltrimethylsilane.

In some implementations, the silane compound containing a carbon-carbon double bond includes tetravinylsilane.

Because of the presence of the carbon-carbon double bond, the silane compound containing a carbon-carbon double bond can be reduced to form a film at the anode prior to the solvent and produce polymer components in the SEI film, thereby improving the flexibility of the SEI film. Moreover, the SEI film can cover the surface of the anode plate to reduce the exposure of the anode plate to the electrolyte, thereby reducing side reaction and gas production and improving the performance of the lithium secondary battery.

In some implementations, the cyclic lithium borate compound includes a compound with a structure shown in formula I, 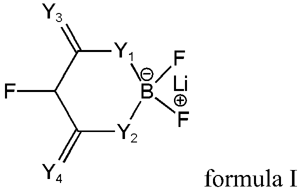 where Y₁, Y₂, Y₃, and Y₄ each independently include at least one of an oxygen atom and a sulfur atom.

In some implementations, the cyclic lithium borate compound includes at least one of

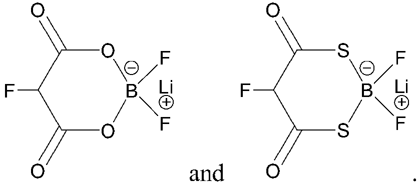

In some optional implementations, Yi, Y₂, Y₃, and Y₄ in formula I each include an oxygen atom.

The foregoing cyclic lithium borate compound can be reduced to form a film prior to the cyclic carbonate compound and form components rich in lithium salt in the SEI film, thereby improving the thermal stability of the SEI film and reducing the degree of oxidative decomposition of the entire SEI film and the solubility of the SEI film in the electrolyte solvent, thus improving the storage performance of the lithium secondary battery.

In some implementations, based on the total mass of the electrolyte, the mass content W1 of the silane compound containing a carbon-carbon double bond and the mass content W2 of the cyclic lithium borate compound satisfy: 0.01 ≤ W1/W2 ≤ 200.

In some implementations, based on the total mass of the electrolyte, the mass content W1 of the silane compound containing a carbon-carbon double bond and the mass content W2 of the cyclic lithium borate compound satisfy: 0.1 ≤ W1/W2 ≤ 10.

In some implementations, based on the total mass of the electrolyte, the mass content W1 of the silane compound containing a carbon-carbon double bond and the mass content W2 of the cyclic lithium borate compound satisfy: 0.5 ≤ W1/W2 ≤ 5.

When the value of W1/W2 is excessively low, the content of the silane compound containing a carbon-carbon double bond is too low to improve the flexibility of the SEI film. When the value of W1/W2 is excessively high, the content of the cyclic lithium borate compound is too low to improve the thermal stability of the SEI film. Therefore, by controlling the ratio of the mass content of the silane compound containing a carbon-carbon double bond to the mass content of the cyclic lithium borate compound within an appropriate range, the silane compound containing a carbon-carbon double bond and the cyclic lithium borate compound can cooperate to comprehensively improve the flexibility and thermal stability of the SEI film, thereby achieving the balance between the storage performance and direct current impedance of the lithium secondary battery and comprehensively improving the performance of the lithium secondary battery.

In some implementations, based on the total mass of the electrolyte, the mass content W3 of the cyclic carbonate compound satisfies: 3% ≤ W3 ≤ 20%.

In some implementations, based on the total mass of the electrolyte, the mass content W3 of the cyclic carbonate compound satisfies: 5% ≤ W3 ≤ 20%.

When the content of the cyclic carbonate compound in the electrolyte is lower than 3%, the conductivity of the electrolyte is excessively low, affecting the cycling performance of the battery. When the content of the cyclic carbonate compound in the electrolyte is higher than 20%, the performance of the battery is damaged due to the oxidative decomposition and the gas production. Therefore, by controlling the content of the cyclic carbonate compound in the electrolyte within an appropriate range, the balance between the formation of the SEI film and the ion conductivity of the electrolyte can be achieved, thereby improving the cycling performance of the lithium secondary battery and reducing the degree of gas production during storage.

In some implementations, based on the total mass of the electrolyte, the mass content W1 of the silane compound containing a carbon-carbon double bond satisfies: 0.01% ≤ W1 ≤ 5%.

In some implementations, based on the total mass of the electrolyte, the mass content W1 of the silane compound containing a carbon-carbon double bond satisfies: 0.01% ≤ W1 ≤ 3%.

When the content of the silane compound containing a carbon-carbon double bond in the electrolyte is lower than 0.01%, an effective film-forming effect cannot be achieved. When the content of the silane compound containing a carbon-carbon double bond in the electrolyte is higher than 5%, the film-forming impedance is excessively large, affecting the fast charge performance of the battery. Therefore, by controlling the content of the silane compound containing a carbon-carbon double bond in the electrolyte within an appropriate range, the flexibility of the SEI film can be improved, and side reactions and gas production are reduced, thereby improving the performance of the lithium secondary battery.

In some implementations, based on the total mass of the electrolyte, the mass content W2 of the cyclic lithium borate compound satisfies: 0.01% ≤ W2 ≤ 3%.

In some implementations, based on the total mass of the electrolyte, the mass content W2 of the cyclic lithium borate compound satisfies: 0.1% ≤ W2 ≤ 2%.

When the content of the cyclic lithium borate compound in the electrolyte is lower than 0.01%, an effective film-forming effect cannot be achieved. When the content of the cyclic lithium borate compound in the electrolyte is higher than 3%, the connectivity of the electrolyte may be deteriorated due to an increase in the viscosity of the electrolyte. Therefore, by controlling the content of the cyclic lithium borate compound in the electrolyte within an appropriate range, the thermal stability of the SEI film can be improved, thereby improving the storage performance of the lithium secondary battery.

In some implementations, the electrolyte includes a second solvent. The second solvent includes a linear carbonate compound. The linear carbonate compound includes at least one of dimethyl carbonate, ethyl methyl carbonate, diethyl carbonate, ethyl acetate, methyl acetate, methyl propionate, ethyl propionate, and propyl propionate.

By adding the foregoing type of second solvent to the electrolyte, the viscosity of the electrolyte can be reduced, and the conductivity of the electrolyte can be improved, thereby further improving the fast charge performance and the cycle life of the battery.

In some implementations, the electrolyte includes a lithium salt. The lithium salt includes at least one of lithium hexafluorophosphate, lithium bis(fluorosulfonyl)imide, lithium fluorosulfonyl(perfluorobutylsulfonyl)imide, and lithium bis(trifluoromethylsulfonyl)imide. A concentration of the lithium salt in the electrolyte is 0.8 mol /L to 1.3 mol/L.

In some implementations, the concentration of the lithium salt in the electrolyte is 0.8 mol/L, 0.9 mol/L, 1.0 mol/L, 1.1 mol/L, 1.2 mol/L, 1.3 mol/L, or a value in a range formed by any two of the foregoing concentrations.

By controlling the concentration of the lithium salt in the electrolyte within the foregoing range, the connectivity of the electrolyte can be relatively high, which is beneficial to further improving the cycle life of the battery.

The present application further provides a lithium secondary battery, including a positive electrode plate, a negative electrode plate, and the electrolyte according to the first aspect of the present application. During the charging and discharging process of the battery, active ions are intercalated and deintercalated back and forth between the positive electrode plate and the negative electrode plate. The electrolyte functions to conduct ions between the positive electrode plate and the negative electrode plate. A separator is disposed between the positive electrode plate and the negative electrode plate to mainly play a role in preventing a short circuit between a positive electrode and a negative electrode while allowing ions to pass through.

### [Positive electrode plate]

The positive electrode plate includes a positive electrode current collector and a positive electrode material layer located on at least one side of the positive electrode current collector.

As an example, the positive electrode current collector has two opposite surfaces in a thickness direction thereof, and the positive electrode material layer is disposed on either or both of the two opposite surfaces of the positive electrode current collector.

In some implementations, the positive electrode plate includes a positive electrode current collector and a positive electrode material layer located on at least one side of the positive electrode current collector. The positive electrode material layer includes one or more of Li_{d}[NiₓCo_{y}X1_{z}M1_{1-x-y-z}]O₂, LiMn₂O₄, Li₂MnO₃·(1-a)LiAO₂ and LiM2X2O₄. 0.1 ≤ d ≤ 1, and X1 includes Mn and/or Al. M1 includes one or more of Co, Ni, Mn, Mg, Cu, Zn, Al, Sn, B, Ga, Cr, Sr, V, and Ti. 0 ≤ x < 1, 0 ≤ y ≤ 1, 0 ≤ z ≤ 1, and x + y + z ≤ 1. A includes one or more of Ni, Co, and Mn. 0 < a < 1. M2 includes one or more of Fe, Mn, Ni, and Co. X2 in X2O₄^{h-} includes one or more of S, P, As, V, Mo, and W. h = 2 or 3.

In some implementations, the positive electrode material layer includes Li_{d}[NiₓCo_{y}X1_{z}M1_{1-x-y-z}]O₂. 0.1 ≤ d ≤ 1. X1 includes Mn and/or Al. M1 includes one or more of Co, Ni, Mn, Mg, Cu, Zn, Al, Sn, B, Ga, Cr, Sr, V, and Ti. 0 ≤ x < 1, 0 ≤ y ≤ 1, 0 ≤ z ≤ 1, and x + y + z ≤ 1.

In some implementations, the positive electrode current collector may be a metal foil or a composite current collector. For example, in the case of the metal foil, an aluminum foil may be used. The composite current collector may include a polymer material substrate layer and a metal layer formed on at least one surface of the polymer material substrate layer. The composite current collector may be formed by forming a metal material (aluminum, aluminum alloy, nickel, nickel alloy, titanium, titanium alloy, silver, silver alloy, or the like) on the polymer material substrate (for example, a substrate of polypropylene (PP), polyethylene terephthalate (PET), polybutylene terephthalate (PBT), polystyrene (PS), or polyethylene (PE)).

In some implementations, the positive electrode material layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some implementations, the positive electrode material layer further optionally includes a conductive agent. As an example, the conductive agent may include at least one of superconducting carbon, acetylene black, carbon black, Ketjen black, carbon dots, carbon nanotubes, graphene, and carbon nanofibers.

In some implementations, the positive electrode plate may be prepared in the following manner. The components for preparing the positive electrode plate, such as the positive electrode material layer, the conductive agent, the binder, and any other component, are dispersed in a solvent (e.g., N-methylpyrrolidone) to form a positive electrode slurry. The positive electrode slurry is applied onto the positive electrode current collector, followed by drying, cold pressing, and other processes, to obtain the positive electrode plate.

### [Negative electrode plate]

The negative electrode plate includes a negative electrode current collector and a negative electrode material layer located on at least one side of the negative electrode current collector.

As an example, the negative electrode current collector has two surfaces opposite to each other in a thickness direction of the negative electrode current collector, and the negative electrode material layer is disposed on either or both of the two opposite surfaces of the negative electrode current collector.

In some implementations, the negative electrode plate includes a negative electrode current collector and a negative electrode material layer located on at least one side of the negative electrode current collector. The negative electrode material layer includes at least one of artificial graphite, natural graphite, soft carbon, hard carbon, mesocarbon microbeads, a silicon-based material, and a tin-based material.

In some implementations, the negative electrode material layer includes at least one of artificial graphite and natural graphite.

In some implementations, the negative electrode current collector may be a metal foil or a composite current collector. For example, in the case of the metal foil, a copper foil may be used. The composite current collector may include a polymer material substrate layer and a metal layer formed on at least one surface of the polymer material substrate. The composite current collector may be formed by forming a metal material (copper, copper alloy, nickel, nickel alloy, titanium, titanium alloy, silver, silver alloy, or the like) on the polymer material substrate (for example, a substrate of polypropylene (PP), polyethylene terephthalate (PET), polybutylene terephthalate (PBT), polystyrene (PS), or polyethylene (PE)).

In some implementations, the negative electrode material layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), poly(methyl methacrylate) (PMAA), and carboxymethyl chitosan (CMCS).

In some implementations, the negative electrode material layer optionally further includes a conductive agent. The conductive agent may be selected from at least one of superconducting carbon, acetylene black, carbon black, Ketjen black, carbon dots, carbon nanotubes, graphene, and carbon nanofibers.

In some implementations, the negative electrode material layer further optionally includes another additive such as a thickener (for example, sodium carboxymethyl cellulose (CMC-Na)).

In some implementations, the negative electrode plate may be prepared in the following manner. The components for preparing the negative electrode plate, such as the negative electrode material layer, the conductive agent, the binder, and any other component, are dispersed in a solvent (e.g., deionized water) to form a negative electrode slurry. The negative electrode slurry was applied onto the negative electrode current collector, followed by drying, cold pressing, and other processes, to obtain the negative electrode plate.

### [Separator]

In some implementations, the secondary battery further includes a separator. The type of the separator is not specifically limited in the present application, and any well-known separator with a porous structure having good chemical stability and mechanical stability may be selected.

In some implementations, the material of the separator may be selected from at least one of glass fiber, non-woven cloth, polyethylene, polypropylene, and polyvinylidene fluoride. The separator may be either a single-layer thin film or a multi-layer composite thin film, which is not particularly limited. When the separator is a multi-layer composite thin film, the materials of the layers may be the same or different, which is not particularly limited.

In some implementations, the positive electrode plate, the negative electrode plate, and the separator may be made into an electrode assembly by a winding process or a laminating process.

### [Secondary battery]

In some implementations, the secondary battery may include an outer package. The outer package may be used for encapsulating the aforementioned electrode assembly and the electrolyte.

In some implementations, the outer package of the secondary battery may be a hard case, such as a hard plastic case, an aluminum case and a steel case. The outer package of the secondary battery may alternatively be a soft package such as a pouch-type soft package. The material of the soft package may be plastic. Examples of the plastic may include polypropylene, polybutylene terephthalate, polybutylene succinate, and the like.

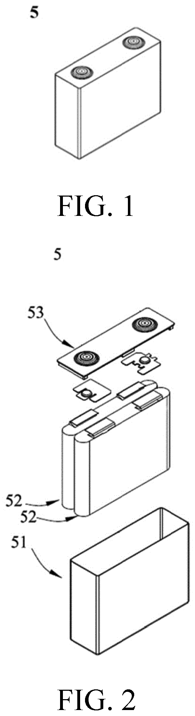

The shape of the secondary battery is not particularly limited in the present application, and may be a cylinder, a rectangle, or any other shape. For example, FIG. 1 shows a secondary battery 5 having a rectangle structure as an example.

In some implementations, referring to FIG. 2, the outer package may include a case 51 and a cover plate 53. The case 51 may include a bottom plate and side plates connected to the bottom plate, and the bottom plate and the side plates enclose an accommodating cavity. The case 51 has an opening in communication with the accommodating cavity, and the cover plate 53 can cover the opening, to close the accommodating cavity. The positive electrode plate, the negative electrode plate, and the separator may form an electrode assembly 52 by a winding process or a laminating process. The electrode assembly 52 is encapsulated in the accommodating cavity. The electrolyte infiltrates into the electrode assembly 52. The number of electrode assemblies 52 included in the secondary battery 5 may be one or more, which can be selected by those skilled in the art according to specific actual requirements.

### [Electric device]

In addition, the present application further provides an electric device. The electric device includes the lithium secondary battery provided in the present application. The secondary battery, a battery module, or a battery pack may be used as a power supply of the electric device, and may also be used as an energy storage unit of the electric device. The electric device may include, but is not limited to, a mobile device (for example, a mobile phone or a notebook computer), an electric vehicle (for example, an all-electric vehicle, a hybrid electric vehicle, a plug-in hybrid electric vehicle, an electric bicycle, an electric scooter, an electric golf cart, or an electric truck), an electric train, a ship, a satellite, an energy storage system, or the like.

Whether to use the secondary battery, the battery module, or the battery pack may be determined according to use requirements of the electric device.

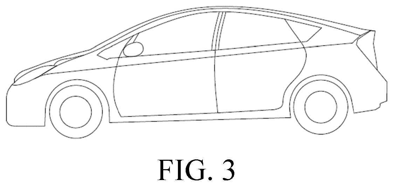

FIG. 3 shows an electric device as an example. The electric device is an all-electric vehicle, a hybrid electric vehicle, a plug-in hybrid electric vehicle, or the like. To satisfy requirements of the electric device for high power and high energy density of the secondary battery, the battery pack or the battery module may be used.

As another example, the device may be a mobile phone, a tablet computer, a notebook computer, or the like. The device is generally required to be light and thin, and can use a secondary battery as a power source.

### Embodiments

Embodiments of the present application will be described hereinafter. The embodiments described below are exemplary, and are only intended to explain the present application rather than being construed as a limitation to the present application. Where specific techniques or conditions are not specified in the examples, the techniques or conditions described in the literatures of the art or the product specifications are followed. Where no manufacturer is indicated for the reagents or instruments used, they are conventional products that can be commercially obtained.

### I. Preparation method

### Embodiment 1

### 1) Electrolyte

In an argon atmosphere glove box (H₂O content < 10 ppm, O₂ content < 1 ppm), a first solvent ethylene carbonate (EC) and a second solvent ethyl methyl carbonate (EMC) were mixed, and 1 mol/L LiPF₆ lithium salt was dissolved, followed by the addition of tetravinylsilane and lithium fluoromalonato(difluoro) borate (Y₁ to Y₄ in formula I are all O). The resulting mixture was uniformly mixed to prepare the electrolyte. Based on the total mass of the electrolyte, the mass content W3 of the first solvent was 10%, the mass content W1 of the tetravinylsilane was 2%, and the mass content W2 of the lithium fluoromalonato(difluoro) borate was 1%.

### 2) Preparation of positive electrode plate

A positive electrode active material LiNi_{0.5}Co_{0.2}Mn_{0.3}O₂, a conductive agent acetylene black, and a binder polyvinylidene fluoride (PVDF) were thoroughly stirred and mixed in a weight ratio of 90:5:5 in an N-methylpyrrolidone solvent system to obtain a positive electrode slurry having a solid content of 50 wt%. The positive electrode slurry was uniformly applied to a positive electrode current collector aluminum foil. The aluminum foil was air-dried at room temperature, transferred to an 85°C oven for oven drying, followed by cold pressing, trimming, slicing, and slitting, and then dried under vacuum at 85°C for 4 h, to obtain the positive electrode plate.

### 3) Preparation of negative electrode plate

A negative electrode active material artificial graphite, a conductive agent Super P, a thickener sodium carboxymethyl cellulose (CMC-Na), and a binder styrene-butadiene rubber (SBR) were uniformly mixed in a mass ratio of 80:15:3:2 in deionized water, to obtain a negative electrode slurry having a solid content of 30 wt%. The negative electrode slurry was applied to a current collector copper foil. The copper foil was air-dried at room temperature, transferred to an 85°C oven for oven drying, followed by cold pressing, trimming, slicing, and slitting, and then dried under vacuum at 120°C for 12 h, to obtain the negative electrode plate.

### 4) Separator

A polyethylene (PE) porous polymer thin film with a thickness of 16 µm was used as the separator.

### 5) Preparation of battery

The positive electrode plate, the separator, and the negative electrode plate were laminated in order such that the separator was located between the positive electrode plate and the negative electrode plate to separate the positive electrode plate from the negative electrode plate, and wound to obtain a bare cell. Tabs were welded. The bare cell was placed in an outer package. The prepared electrolyte was injected into the dried cell, followed by encapsulation, standing, formation, shaping, capacity testing, and the like. In this way, the preparation of the pouch lithium secondary battery was completed (where the pouch lithium secondary battery had a thickness of 4.0 mm, a width of 60 mm, and a length of 140 mm).

Preparation methods of the secondary battery in Embodiments 2 to 21 and Comparative Examples 1 to 4 are similar to the preparation method in Embodiment 1, but the compositions and product parameters of the electrode plates of the battery were adjusted. For details of different product parameters, reference may be made to Table 1.

### II. Performance test

### 1. Electrolyte

### 1) Ion conductivity

The test of the ion connectivity of the electrolyte was performed with reference to the method in HG-T 4067-2015. Specific operations are as follows:
Pretreatment: The to-be-tested electrolyte was thermostated to the temperature for testing and standard solutions were thermostated to 25°C (± 0.1°C).

Test: The instrument was calibrated by testing the two standard solutions at 25°C. After calibration, the electrodes were cleaned. Subsequently, the sample was tested. The electrodes were vertically placed in the to-be-tested electrolyte. The test was started. After data was stable for 10 s or more, the test result was recorded.

### 2) Method for measuring content of solvent in electrolyte

The detection on method for testing the content of the solvent in the electrolyte was performed according to GB/T 9722-2006. The specific method was as follows: A standard solution was prepared. The standard solution and the sample were directly selected and automatically injected for FID detection. The type of the additive was determined according to the peak position, and the content of the additive in the electrolyte was calculated according to the peak area.

### 3) Method for measuring content of additive (lithium salt) in electrolyte

The method for testing the content of a salt additive was performed according to GB/T 6040-2002. The specific method was as follows: A specific amount of electrolyte (where the concentration of a diluted solution fall within the mid-range of the standard curve) was weighed, and ultra-pure water was added to a volume 100 mL. Automatic sample injection detection was performed by ion chromatography. The type of the additive was determined according to the peak position, and the content of the additive was determined according to the peak area.

4) Methods for testing mass content W3 of cyclic carbonate compound, mass content W1 of silane compound containing a carbon-carbon double bond, and mass content W2 of cyclic lithium borate compound in electrolyte

A qualitative and quantitative analysis was performed on organic components in the electrolyte by gas chromatography with reference to the standard GB/T9722-2006, CHEMICAL REAGENT - GENERAL RULES FOR THE GAS CHROMATOGRAPHY, so as to obtain the mass content W3 of the cyclic carbonate compound, the mass content W1 of the silane compound containing a carbon-carbon double bond, and the mass content W2 of the cyclic lithium borate compound in the electrolyte.

### 2. Battery

### 1) Direct current impedance

At 25°C, the state of charge of a cell was adjusted to 50% SOC, and the cell was allowed to stand for 30 min. The battery voltage at this time was recorded as U1 (V). The cell was discharged at 4 C for 30 s. The battery voltage at this time was recorded as U2 (V). Correspondingly, the discharging current I (mA) of the cell was 4 × design capacity (mAh) of the cell. Direct current impedance DCR (mΩ) = (U1-U2)/I.

### 2) Cycling performance

At 25°C, the prepared lithium secondary battery was charged at a constant current at a rate of 1 C to 4.4 V, then charged at a constant voltage to 0.05 C, allowed to stand for 10 min, and discharged at a constant current at a rate of 1 C to 2.8 V. The discharge capacity was recorded as C0. 300 cycles were performed according to the foregoing charging and discharging process. The discharge capacity after 300 cycles was denoted as C1, and the cycle capacity retention rate of the battery was equal to C1/C0×100%.

### 3) Storage performance

At 25°C, the prepared lithium secondary battery was charged at a constant current at a rate of 1 C to 4.4 V, then charged at a constant voltage to 0.05 C, allowed to stand for 5 min, and discharged at a constant current at a rate of 1 C to 2.8 V. The discharge capacity was recorded as D0. Then, the lithium secondary battery was stored at 60°C for 30 days. The lithium secondary battery was taken out and restored to 25°C, discharged at a constant current at a rate of 1 C to 2.8 V, allowed to stand for 2 h, charged at 1 C to 4.4 V, charged at a constant voltage to 0.05 C, allowed to stand for 2 h, and then discharged at 1 C to 2.8 V. The discharge capacity was recorded as D1. Discharge capacity retention rate = D1/D0×100%.

### III. Analysis of test results of embodiments and comparative examples

In accordance with the above methods, the batteries of the embodiments and comparative examples were prepared, and tested for various performance parameters. The results are shown in Table 1 below.

**Table 1 Preparation parameters**

| No. | Electrolyte | | | | |
|---|---|---|---|---|---|
| | First additive | | Second additive | | W1/ W2 |
| | Substance | Mass content W1 /% | Types of groups in formula I | Mass content W2 /% | |
| Embodiment 1 | Tetravinylsilane | 2 | Y1, Y2, Y3, and Y4 are all O | 1 | 2.0 |
| Embodiment 2 | Tetravinylsilane | 2 | Y1, Y2, Y3, and Y4 are all O | 1 | 2.0 |
| Embodiment 3 | Tetravinylsilane | 2 | Y1, Y2, Y3, and Y4 are all O | 1 | 2.0 |
| Embodiment 4 | Tetravinylsilane | 2 | Y1, Y2, Y3, and Y4 are all O | 1 | 2.0 |
| Embodiment 5 | Tetravinylsilane | 2 | Y1, Y2, Y3, and Y4 are all O | 1 | 2.0 |
| Embodiment 6 | Tetravinylsilane | 0.01 | Y1, Y2, Y3, and Y4 are all O | 1 | 0.01 |
| Embodiment 7 | Tetravinylsilane | 0.1 | Y1, Y2, Y3, and Y4 are all O | 1 | 0.1 |
| Embodiment 8 | Tetravinylsilane | 3 | Y1, Y2, Y3, and Y4 are all O | 1 | 3.0 |
| Embodiment 9 | Tetravinylsilane | 5 | Y1, Y2, Y3, and Y4 are all O | 1 | 5.0 |
| Embodiment 10 | Tetravinylsilane | 2 | Y1, Y2, Y3, and Y4 are all O | 0.01 | 200.0 |
| Embodiment 11 | Tetravinylsilane | 2 | Y1, Y2, Y3, and Y4 are all O | 0.1 | 20.0 |
| Embodiment 12 | Tetravinylsilane | 2 | Y1, Y2, Y3, and Y4 are all O | 2 | 1.0 |
| Embodiment 13 | Tetravinylsilane | 2 | Y1, Y2, Y3, and Y4 are all O | 3 | 0.7 |
| Embodiment 14 | Tetravinylsilane | 2 | Y1, Y2, Y3, and Y4 are all O | 1 | 2.0 |
| Embodiment 15 | Trivinylethylsilane | 2 | Y1, Y2, Y3, and Y4 are all O | 1 | 2.0 |
| Embodiment 16 | Vinyltrimethylsilane | 2 | Y1, Y2, Y3, and Y4 are all O | 1 | 2.0 |
| Embodiment 17 | Tetravinylsilane | 2 | Y1 and Y2 are S, and Y3 and Y4 are O | 1 | 2.0 |
| Embodiment 18 | Tetravinylsilane | 2 | Y1, Y2, Y3, and Y4 are all O | 1 | 2.0 |
| Comparative Example 1 | / | / | Y1, Y2, Y3, and Y4 are all O | 1 | / |
| Comparative Example 2 | Tetravinylsilane | 2 | / | / | / |
| Comparative Example 3 | Tetravinylsilane | 5 | Y1, Y2, Y3, and Y4 are all O | 3 | 1.7 |

**Table 2 Preparation parameters**

| No. | Electrolyte | | | | |
|---|---|---|---|---|---|
| | First solvent | | Second solvent | Lithium salt | (W1+W2)/ W3 |
| | Substance | Mass content W3 /% | | | |
| Embodiment 1 | Ethylene carbonate | 10 | Ethyl methyl carbonate | LiPF6+LiFSI | 0.30 |
| Embodiment 2 | Ethylene carbonate | 3 | Ethyl methyl carbonate | LiPF6+LiFSI | 1.00 |
| Embodiment 3 | Ethylene carbonate | 5 | Ethyl methyl carbonate | LiPF6+LiFSI | 0.60 |
| Embodiment 4 | Ethylene carbonate | 15 | Ethyl methyl carbonate | LiPF6+LiFSI | 0.20 |
| Embodiment 5 | Ethylene carbonate | 20 | Ethyl methyl carbonate | LiPF6+LiFSI | 0.15 |
| Embodiment 6 | Ethylene carbonate | 10 | Ethyl methyl carbonate | LiPF6+LiFSI | 0.10 |
| Embodiment 7 | Ethylene carbonate | 10 | Ethyl methyl carbonate | LiPF6+LiFSI | 0.11 |
| Embodiment 8 | Ethylene carbonate | 10 | Ethyl methyl carbonate | LiPF6+LiFSI | 0.40 |
| Embodiment 9 | Ethylene carbonate | 10 | Ethyl methyl carbonate | LiPF6+LiFSI | 0.60 |
| Embodiment 10 | Ethylene carbonate | 10 | Ethyl methyl carbonate | LiPF6+LiFSI | 0.20 |
| Embodiment 11 | Ethylene carbonate | 10 | Ethyl methyl carbonate | LiPF6+LiFSI | 0.21 |
| Embodiment 12 | Ethylene carbonate | 10 | Ethyl methyl carbonate | LiPF6+LiFSI | 0.40 |
| Embodiment 13 | Ethylene carbonate | 10 | Ethyl methyl carbonate | LiPF6+LiFSI | 0.50 |
| Embodiment 14 | Fluoroethylene carbonate | 10 | Ethyl methyl carbonate | LiPF6+LiFSI | 0.30 |
| Embodiment 15 | Ethylene carbonate | 10 | Ethyl methyl carbonate | LiPF6+LiFSI | 0.30 |
| Embodiment 16 | Ethylene carbonate | 10 | Ethyl methyl carbonate | LiPF6+LiFSI | 0.30 |
| Embodiment 17 | Ethylene carbonate | 10 | Ethyl methyl carbonate | LiPF6+LiFSI | 0.30 |
| Embodiment 18 | Ethylene carbonate | 10 | Ethyl methyl carbonate | LiPF6+LiFSI | 0.30 |
| Comparative Example 1 | Ethylene carbonate | 10 | Ethyl methyl carbonate | LiPF6+LiFSI | / |
| Comparative Example 2 | Ethylene carbonate | 10 | Ethyl methyl carbonate | LiPF6+LiFSI | / |
| Comparative Example 3 | Ethylene carbonate | 2 | Ethyl methyl carbonate | LiPF6+LiFSI | 4.00 |

**Table 3: Preparation and performance parameters**

| No. | Preparation parameters of battery | | Performance parameters of battery | | |
|---|---|---|---|---|---|
| | Positive electrode active material | Negative electrode active material | Direct current impedance | Cycling performance | Storage performance |
| Embodiment 1 | LiNi_{0.5}Co_{0.2}Mn_{0.3}O₂ | Artificial Graphite | 34 | 96.40% | 95.10% |
| Embodiment 2 | LiNi_{0.5}Co_{0.2}Mn_{0.3}O₂ | Artificial Graphite | 28 | 97.50% | 96.40% |
| Embodiment 3 | LiNi_{0.5}Co_{0.2}Mn_{0.3}O₂ | Artificial Graphite | 32 | 96.60% | 95.70% |
| Embodiment 4 | LiNi_{0.5}Co_{0.2}Mn_{0.3}O₂ | Artificial Graphite | 35 | 96.10% | 94.90% |
| Embodiment 5 | LiNi_{0.5}Co_{0.2}Mn_{0.3}O₂ | Artificial Graphite | 38 | 95.60% | 94.70% |
| Embodiment 6 | LiNi_{0.5}Co_{0.2}Mn_{0.3}O₂ | Artificial Graphite | 57 | 92.30% | 90.20% |
| Embodiment 7 | LiNi_{0.5}Co_{0.2}Mn_{0.3}O₂ | Artificial Graphite | 46 | 93.50% | 91.70% |
| Embodiment 8 | LiNi_{0.5}Co_{0.2}Mn_{0.3}O₂ | Artificial Graphite | 43 | 93.80% | 92.40% |
| Embodiment 9 | LiNi_{0.5}Co_{0.2}Mn_{0.3}O₂ | Artificial Graphite | 30 | 97.10% | 96.00% |
| Embodiment 10 | LiNi_{0.5}Co_{0.2}Mn_{0.3}O₂ | Artificial Graphite | 63 | 90.00% | 88.40% |
| Embodiment 11 | LiNi_{0.5}Co_{0.2}Mn_{0.3}O₂ | Artificial Graphite | 65 | 90.20% | 89.10% |
| Embodiment 12 | LiNi_{0.5}Co_{0.2}Mn_{0.3}O₂ | Artificial Graphite | 45 | 93.50% | 92.00% |
| Embodiment 13 | LiNi_{0.5}Co_{0.2}Mn_{0.3}O₂ | Artificial Graphite | 50 | 93.10% | 91.80% |
| Embodiment 14 | LiNi_{0.5}Co_{0.2}Mn_{0.3}O₂ | Artificial Graphite | 35 | 96.30% | 95.20% |
| Embodiment 15 | LiNi_{0.5}Co_{0.2}Mn_{0.3}O₂ | Artificial Graphite | 32 | 96.50% | 95.10% |
| Embodiment 16 | LiNi_{0.5}Co_{0.2}Mn_{0.3}O₂ | Artificial Graphite | 30 | 96.20% | 94.90% |
| Embodiment 17 | LiNi_{0.5}Co_{0.2}Mn_{0.3}O₂ | Artificial Graphite | 36 | 95.80% | 94.60% |
| Embodiment 18 | LiNi_{0.5}Co_{0.2}Mn_{0.3}O₂ | Mesocarbon microbeads | 28 | 95.60% | 94.50% |
| Comparative Example 1 | LiNi_{0.5}Co_{0.2}Mn_{0.3}O₂ | Artificial Graphite | 89 | 80.30% | 76.10% |
| Comparative Example 2 | LiNi_{0.5}Co_{0.2}Mn_{0.3}O₂ | Artificial Graphite | 80 | 81.20% | 76.40% |
| Comparative Example 3 | LiNi_{0.5}Co_{0.2}Mn_{0.3}O₂ | Artificial Graphite | 90 | 78.20% | 75.20% |

The electrolytes in Embodiments 1 to 18 all include the first solvent, the silane compound containing a carbon-carbon double bond, and the cyclic lithium borate compound. The lithium secondary batteries containing the electrolytes all have a relatively low direct current impedance, and have excellent storage performance and cycling performance.

The electrolyte in Comparative Example 1 does not contain the silane compound containing a carbon-carbon double bond. As can be seen from the comparison between Embodiments 1 to 18 and Comparative Example 1, the addition of the silane compound containing a carbon-carbon double bond to the electrolyte can effectively reduce the direct current impedance and improve the storage performance and cycling performance of the lithium secondary battery.

The electrolyte in Comparative Example 2 does not contain the cyclic lithium borate compound. As can be seen from the comparison between Embodiments 1 to 18 and Comparative Example 2, the addition of the cyclic lithium borate compound to the electrolyte can effectively reduce the direct current impedance and improve the storage performance and cycling performance of the lithium secondary battery.

In the electrolytes in Embodiments 1 to 18, the mass content W3 of the cyclic carbonate compound, the mass content W1 of the silane compound containing a carbon-carbon double bond, and the mass content W2 of the cyclic lithium borate compound satisfy: 0.001 ≤ (W1+W2)/W3 ≤ 2.67, and 0.01 ≤ W1/W2 ≤ 200. The lithium secondary batteries containing the electrolytes all have a relatively low direct current impedance, and have excellent storage performance and cycling performance.

In the electrolyte in Comparative Example 3, the value of (W1+W2)/W3 does not satisfy the range 0.001 ≤ (W1+W2)/W3 ≤ 2.67. As can be seen from the comparison between Embodiments 1 to 18 and Comparative Example 3, by controlling the contents of the cyclic carbonate compound, the silane compound containing a carbon-carbon double bond, and the cyclic lithium borate compound in the electrolyte within appropriate ranges, the balance among good cycling performance, storage performance, and direct current impedance of the lithium secondary battery can be achieved, thereby comprehensively improving the performance of the lithium secondary battery.

As can be seen from Embodiments 1 to 5, by controlling the mass content W3 of the first solvent ethylene carbonate within 3% to 20%, the lithium secondary batteries can all have a relatively low direct current impedance, and good storage performance and cycling performance. In Comparative Example 3, the mass content W3 of the ethylene carbonate is 2%. As can be seen from the comparison between Embodiments 1 to 5 and Comparative Example 3, by controlling controlling the mass content W3 of the first solvent ethylene carbonate within the range 3% to 20%, the direct current impedance can be effectively reduced, and the storage performance and cycling performance of the lithium secondary battery can be improved.

As can be seen from Embodiments 1 and 6 to 9, by controlling the mass content W1 of the silane compound containing a carbon-carbon double bond within 0.01% to 5%, the lithium secondary batteries can all have a relatively low direct current impedance, and good storage performance and cycling performance.

As can be seen from Embodiments 1 and 10 to 13, by controlling the mass content W2 of the cyclic lithium borate compound within 0.01% to 3%, the lithium secondary batteries can all have a relatively low direct current impedance, and good storage performance and cycling performance.

As can be seen from Embodiments 1 and 14 to 17, by using multiple different types of first solvents (for example, ethylene carbonate and fluoroethylene carbonate), or using multiple different types of silane compounds containing a carbon-carbon double bond (for example, tetravinylsilane, trivinylethylsilane, and vinyltrimethylsilane), or using multiple different types of cyclic lithium borate compounds (for example, compounds with formula I in which Y1, Y2, Y3, and Y4 are all an oxygen atom, and compounds with formula I in which Y1 and Y2 are a sulfur atom and Y3 and Y4 are an oxygen atom), the lithium secondary batteries can all have a relatively low direct current impedance, and good storage performance and cycling performance.

As can be seen from Embodiments 1 and 18, by using different types of negative electrode active materials (for example, artificial graphite and mesocarbon microbeads), the lithium secondary batteries can all have a relatively low direct current impedance, and good storage performance and cycling performance.

It should be noted that the present application is not limited to the foregoing implementations. The above implementations are merely exemplary, and implementations having substantially the same technical idea and the same effects within the scope of the technical solutions of the present application are all included in the technical scope of the present application. In addition, other implementations constructed by applying various modifications conceivable to those skilled in the art to the implementations and combining some of the constituent elements of the implementations without departing from the scope of the essence of the present application are also included in the scope of the present application.

## Claims

1. An electrolyte for a lithium secondary battery, comprising a first solvent, a silane compound containing a carbon-carbon double bond, and a cyclic lithium borate compound, the first solvent comprising a cyclic carbonate compound, and the cyclic carbonate compound comprising at least one of ethylene carbonate, fluoroethylene carbonate, and propylene carbonate, wherein
based on a total mass of the electrolyte, a mass content W3 of the cyclic carbonate compound, a mass content W1 of the silane compound containing a carbon-carbon double bond, and a mass content W2 of the cyclic lithium borate compound satisfy: 0.001 ≤ (W1+W2)/W3 ≤ 2.67.

2. The electrolyte according to claim 1, wherein based on the total mass of the electrolyte, the mass content W3 of the cyclic carbonate compound, the mass content W1 of the silane compound containing a carbon-carbon double bond, and the mass content W2 of the cyclic lithium borate compound satisfy: 0.005 ≤ (W1+W2)/W3 ≤ 2.

3. The electrolyte according to claim 1 or 2, wherein the silane compound containing a carbon-carbon double bond comprises at least one of tetravinylsilane, trivinylethylsilane, divinyldiethylsilane, and vinyltrimethylsilane.

4. The electrolyte according to any one of claims 1 to 3, wherein the silane compound containing a carbon-carbon double bond comprises tetravinylsilane.

5. The electrolyte according to any one of claims 1 to 4, wherein the cyclic lithium borate compound comprises a compound with a structure shown in formula I, 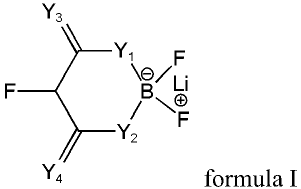 wherein Y₁, Y₂, Y₃, and Y₄ each independently comprise at least one of an oxygen atom and a sulfur atom.

6. The electrolyte according to any one of claims 1 to 5, wherein the cyclic lithium borate compound comprises at least one of

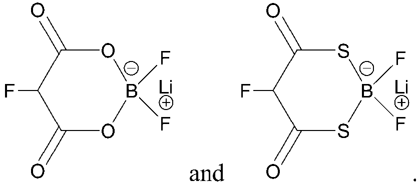

7. The electrolyte according to any one of claims 1 to 6, wherein based on the total mass of the electrolyte, the mass content W1 of the silane compound containing a carbon-carbon double bond and the mass content W2 of the cyclic lithium borate compound satisfy: 0.01 ≤ W1/W2 ≤ 200.

8. The electrolyte according to any one of claims 1 to 7, wherein based on the total mass of the electrolyte, the mass content W1 of the silane compound containing a carbon-carbon double bond and the mass content W2 of the cyclic lithium borate compound satisfy: 0.1 ≤ W1/W2 ≤ 10.

9. The electrolyte according to any one of claims 1 to 8, wherein based on the total mass of the electrolyte, the mass content W1 of the silane compound containing a carbon-carbon double bond and the mass content W2 of the cyclic lithium borate compound satisfy: 0.5 ≤ W1/W2 ≤ 5.

10. The electrolyte according to any one of claims 1 to 9, wherein based on the total mass of the electrolyte, the mass content W3 of the cyclic carbonate compound satisfies: 3% ≤ W3 ≤ 20%.

11. The electrolyte according to any one of claims 1 to 10, wherein based on the total mass of the electrolyte, the mass content W3 of the cyclic carbonate compound satisfies: 5% ≤ W3 ≤ 20%.

12. The electrolyte according to any one of claims 1 to 11, wherein based on the total mass of the electrolyte, the mass content W1 of the silane compound containing a carbon-carbon double bond satisfies: 0.01% ≤ W1 ≤ 5%.

13. The electrolyte according to any one of claims 1 to 12, wherein based on the total mass of the electrolyte, the mass content W1 of the silane compound containing a carbon-carbon double bond satisfies: 0.01% ≤ W1 ≤ 3%.

14. The electrolyte according to any one of claims 1 to 13, wherein based on the total mass of the electrolyte, the mass content W2 of the cyclic lithium borate compound satisfies: 0.01% ≤ W2 ≤ 3%.

15. The electrolyte according to any one of claims 1 to 14, wherein based on the total mass of the electrolyte, the mass content W2 of the cyclic lithium borate compound satisfies: 0.1% ≤ W2 ≤ 2%.

16. The electrolyte according to any one of claims 1 to 15, wherein the electrolyte comprises a second solvent, and the second solvent comprises a linear carbonate compound; and
the linear carbonate compound comprises at least one of dimethyl carbonate, ethyl methyl carbonate, diethyl carbonate, ethyl acetate, methyl acetate, methyl propionate, ethyl propionate, and propyl propionate.

17. The electrolyte according to any one of claims 1 to 16, wherein the electrolyte comprises a lithium salt, and the lithium salt comprises at least one of lithium hexafluorophosphate, lithium bis(fluorosulfonyl)imide, lithium fluorosulfonyl(perfluorobutylsulfonyl)imide, and lithium bis(trifluoromethylsulfonyl)imide; and
a concentration of the lithium salt in the electrolyte is 0.8 mol/L to 1.3 mol/L.

18. A lithium secondary battery, comprising a positive electrode plate, a negative electrode plate, and the electrolyte according to any one of claims 1 to 17.

19. The lithium secondary battery according to claim 18, wherein the positive electrode plate comprises a positive electrode current collector and a positive electrode material layer located on at least one side of the positive electrode current collector, and the positive electrode material layer comprises one or more of Li_{d}[NiₓCo_{y}X1_{z}M1_{1-x-y-z}]O₂, LiMn₂O₄, Li₂MnO₃·(1-a)LiAO₂ and LiM2X2O₄, wherein
0.1 ≤ d ≤ 1, and X1 comprises Mn and/or Al; M1 comprises one or more of Co, Ni, Mn, Mg, Cu, Zn, Al, Sn, B, Ga, Cr, Sr, V, and Ti, 0 ≤ x < 1, 0 ≤ y ≤ 1, 0 ≤ z ≤ 1, and x + y + z ≤ 1; A comprises one or more of Ni, Co, and Mn, and 0 < a < 1; M2 comprises one or more of Fe, Mn, Ni, and Co; and X2 in X2O₄^{h-} comprises one or more of S, P, As, V, Mo, and W, and h = 2 or 3.

20. The lithium secondary battery according to claim 19, wherein the positive electrode material layer comprises Li_{d}[NiₓCo_{y}X1_{z}M1_{1-x-y-z}]O₂, wherein 0.1 ≤ d ≤ 1, and X1 comprises Mn and/or Al; and M1 comprises one or more of Co, Ni, Mn, Mg, Cu, Zn, Al, Sn, B, Ga, Cr, Sr, V, and Ti, 0 ≤ x < 1, 0 ≤ y ≤ 1, 0 ≤ z ≤ 1, and x + y + z ≤ 1.

21. The lithium secondary battery according to any one of claims 18 to 20, wherein the negative electrode plate comprises a negative electrode current collector and a negative electrode material layer located on at least one side of the negative electrode current collector, and the negative electrode material layer comprises at least one of artificial graphite, natural graphite, soft carbon, hard carbon, mesocarbon microbeads, a silicon-based material, and a tin-based material.

22. The lithium secondary battery according to claim 21, wherein the negative electrode material layer comprises at least one of artificial graphite and natural graphite.

23. An electric device, comprising the lithium secondary battery according to any one of claims 18 to 22.
